# DEMANDE DE BREVET EUROPEEN

(11) **EP 4 474 711 A1**
(43) Date de publication de la demande: **11.12.2024**
(21) Numéro de dépôt: 23315241.2
(22) Date de dépôt: 09.06.2023
(51) Int. Cl.: F24C 7/08

(54) **PROCÉDÉ DE COMMANDE POUR UN APPAREIL DE CUISSON**

(71) Demandeur: Illinois Tool Works Inc., Glenview IL 60025 (US)
(72) Inventeur: AMARI, Fabrice, 60025 Glenview (US)
(74) Mandataire: HGF

(57) **Abrégé**

L'invention concerne un procédé de commande 100 d'un appareil de cuisson 1 qui comprend la sélection des options A1 -A6, B1-B32, C1-C2, D1-D6 à l'aide des menus déroulants 51, 52, 53, 54 sur une interface utilisateur 5. Plus précisément, le procédé comprend la réception 104 d'une première sélection de type de produit B1 parmi une pluralité de types de produits affichés B1-B5, la réception 106 d'une deuxième sélection de catégorie de cuisson C1 parmi une pluralité de catégories de cuisson affichées C1, C2 associées à la première sélection B1, la réception 108 d'une troisième sélection de style de cuisson D1 parmi une pluralité de styles de cuisson affichés D1-D3 associés à la deuxième sélection C1, et la récupération 108, à partir de la base de données de protocoles de cuisson stockée dans la mémoire 60, d'un protocole de cuisson associé à la combinaison des sélections B1, C1 et D1.

## Description

### Domaine technique de l'invention

L'invention concerne généralement le domaine des appareils de cuisson et plus précisément les appareils de cuisson incorporant un assistant de cuisson pour régir un cycle de cuisson. Plus précisément, mais non exclusivement, la présente invention concerne un procédé de commande pour un tel appareil de cuisson, dans laquelle un protocole de cuisson est déterminé sur la base d'une série de sélections de l'utilisateur, ainsi qu'un système de contrôle d'appareil de cuisson et un appareil de cuisson dans lequel le procédé peut être mis en oeuvre.

### Arrière-plan technique

Il est connu de prévoir un assistant de cuisson avec des protocoles préchargés pour cuire des produits alimentaires prédéterminés selon des recettes prédéterminées. Toutefois, le nombre de combinaisons offertes par ces assistants connus est limité.

### Résumé de l'invention

La présente invention vise à fournir un ensemble plus complet de combinaisons de recettes, avec une plus grande flexibilité dans l'ajustement des protocoles préchargés, tout en minimisant la mémoire nécessaire pour stocker les protocoles.

L'invention concerne généralement un procédé de commande d'appareil de cuisson dans lequel des sélections multiples, de préférence au moins trois, sont effectuées pour sélectionner un protocole de cuisson prédéterminé.

Cela permet de prendre en compte une liste plus complète de recettes de cuisine tout en simplifiant le processus de sélection.

L'appareil de cuisson peut comprendre une interface utilisateur. L'appareil de cuisson peut comprendre un contrôleur, qui peut être connecté de manière opérationnelle à l'interface utilisateur.

Le procédé peut comprendre une étape de réception, par exemple via l'interface utilisateur, d'une sélection de type de produit parmi une pluralité de types de produits sélectionnables. Le procédé peut comprendre une étape d'affichage, par exemple via l'interface utilisateur et/ou en réponse à la sélection de type de produit, d'une pluralité de catégories de cuisson associées à la sélection de type de produit. Le procédé peut comprendre une étape de réception, par exemple via l'interface utilisateur, d'une sélection de catégorie de cuisson parmi la pluralité de catégories de cuisson affichées.

Le procédé peut comprendre une étape d'affichage, par exemple via l'interface utilisateur et/ou en réponse à la sélection de catégorie de cuisson, d'une pluralité de styles de cuisson associés à la sélection de catégorie de cuisson. Le procédé peut comprendre une étape de réception, par exemple via l'interface utilisateur, d'une sélection de style de cuisson parmi la pluralité de styles de cuisson affichés.

Le procédé peut comprendre une étape de récupération, par exemple à partir d'une base de données de protocoles de cuisson, d'un protocole de cuisson associé à la combinaison sélectionnée de type de produit et/ou de catégorie de cuisson et/ou de style de cuisson.

L'invention concerne également un procédé de commande d'appareil de cuisson comprenant une interface utilisateur et un contrôleur connecté de manière opérationnelle à l'interface utilisateur, caractérisé en ce que le procédé comprend les étapes suivantes : réception, via l'interface utilisateur, d'une sélection de type de produit parmi une pluralité de types de produits sélectionnables ; affichage, via l'interface utilisateur et en réponse à la sélection de type de produit, d'une pluralité de catégories de cuisson associées à la sélection de type de produit ; réception, via l'interface utilisateur, d'une sélection de catégorie de cuisson parmi la pluralité de catégories de cuisson affichées ; affichage, via l'interface utilisateur et en réponse à la sélection de catégorie de cuisson, d'une pluralité de styles de cuisson associés à la sélection de catégorie de cuisson ; réception, via l'interface utilisateur, d'une sélection de style de cuisson parmi la pluralité de styles de cuisson affichés ; récupération, à partir d'une base de données de protocoles de cuisson, d'un protocole de cuisson associé à la combinaison sélectionnée de type de produit, de catégorie de cuisson et de style de cuisson.

Le procédé peut comprendre une étape de réception, par exemple via l'interface utilisateur, d'une sélection de catégorie de produits parmi une pluralité de catégories de produits sélectionnables. Le procédé peut comprendre une étape d'affichage, par exemple via l'interface utilisateur et/ou en réponse à la sélection de catégorie de produits, d'une pluralité de types de produits associés à la sélection de catégorie de produits.

Les types de produits sélectionnables peuvent correspondre aux types de produits affichés. Les catégories de produits sélectionnables peuvent comprendre des produits carnés et non carnés.

Les types de produits sélectionnables associés à la catégorie des produits carnés peuvent comprendre au moins un, par exemple au moins deux, des produits suivants : boeuf, agneau, canard, veau, poulet, dinde, porc, poisson, crustacés, cocotte de viande et cocotte de poisson.

Les types de produits sélectionnables associés à la catégorie des produits non carnés peuvent comprendre au moins un, par exemple au moins deux, des produits suivants : légumes verts, légumes racines, pâtes, riz, pain, croissants et tartes.

L'étape d'affichage des catégories de cuisson peut être omise pour au moins un type de produit de la pluralité de types de produits sélectionnables. L'étape de réception de la sélection de catégorie de cuisson peut être omise pour au moins un type de produit de la pluralité de types de produits sélectionnables. Les étapes d'affichage et de réception des catégories de cuisson peuvent être omises pour au moins un type de produit de la pluralité de types de produits sélectionnables.

L'étape d'affichage des catégories de cuisson peut être omise pour les produits non carnés. L'étape de réception de la sélection de catégorie de cuisson peut être omise pour les produits non carnés. Les étapes d'affichage et de réception des catégories de cuisson peuvent être omises pour les produits non carnés.

Les catégories de produits sélectionnables peuvent comprendre deux ou plusieurs catégories parmi la viande rouge, la viande blanche, le poisson, les légumes, les plats cuisinés et les produits de boulangerie ou de pâtisserie.

Les types de produits sélectionnables associés à la catégorie de viande rouge peuvent comprendre au moins un, par exemple au moins deux, des produits suivants : boeuf, agneau, venaison, abats et canard. Les types de produits sélectionnables associés à la catégorie de viande rouge peuvent aussi comprendre les plats cuisinés.

Les types de produits sélectionnables associés à la catégorie de viande blanche peuvent comprendre au moins un, par exemple au moins deux, des produits suivants : poulet, dinde, porc et saucisse. Les types de produits sélectionnables associés à la catégorie de viande blanche peuvent comprendre les plats cuisinés.

Les types de produits sélectionnables associés à la catégorie de poisson peuvent comprendre au moins un, par exemple au moins deux, des produits suivants : poisson entier, portion de poisson, mollusques et crustacés, panés et les produits congelés. Les types de produits sélectionnables associés à la catégorie de poisson peuvent aussi comprendre les plats cuisinés.

Les types de produits sélectionnables associés à la catégorie de légumes peuvent comprendre au moins un, par exemple au moins deux, des produits suivants : légumes verts, légumes-racines, pommes de terre, pâtes, riz et produits surgelés. Les types de produits sélectionnables associés à la catégorie de légumes peuvent aussi comprendre les plats cuisinés.

Les types de produits sélectionnables associés à la catégorie de plats cuisinés peuvent comprendre au moins un, par exemple au moins deux, des produits suivants : viande, poisson, légumes, pommes de terre et produits surgelés. Les types de produits sélectionnables associés à la catégorie de plats cuisinés peuvent aussi comprendre les plats cuisinés.

Les types de produits sélectionnables associés à la catégorie de produits de boulangerie ou de pâtisserie peuvent comprendre au moins un, par exemple au moins deux, des produits suivants : pain, croissants, tartes, desserts aux oeufs, produits surgelés, biscuits et aliments prêts à l'emploi.

La catégorie de cuisson peut comprendre une vitesse de cuisson et/ou une coupe de viande. Les styles de cuisson sélectionnables peuvent comprendre au moins un, par exemple deux ou plus, des styles suivants : grillé, rôti, braisé, cuit au four, à la vapeur, sous vide, poché et à l'étouffée.

Le procédé peut comprendre une étape d'affichage, par exemple via l'interface utilisateur, d'un sélecteur de réglage, qui peut être pour ajuster une caractéristique de produit par défaut du type de produit sélectionné. Le procédé peut comprendre une étape de réception, par exemple via le sélecteur de réglage affiché sur l'interface utilisateur, d'un ajustement de la caractéristique de produit par défaut. Le procédé peut comprendre une étape d'ajustement d'un ou de plusieurs paramètres de cuisson du protocole de cuisson récupéré sur la base de la caractéristique de produit par défaut ajustée.

La caractéristique de produit par défaut peut être l'une parmi une taille et une épaisseur. Le ou les paramètres de cuisson du protocole de cuisson peuvent comprendre un ou plus des paramètres suivants : température ambiante, température à coeur, humidité et durée d'une ou plusieurs étapes du protocole.

Le procédé peut comprendre une étape d'affichage, par exemple via l'interface utilisateur, d'un ou de plusieurs sélecteurs de réglage, qui peuvent permettre chacun d'ajuster une caractéristique de cuisson par défaut du style de cuisson sélectionné. Le procédé peut comprendre une étape de réception, par exemple via le ou les sélecteurs de réglage affichés sur l'interface utilisateur, d'un ajustement de la ou des caractéristiques de cuisson par défaut. Le procédé peut comprendre une étape d'ajustement d'un ou de plusieurs paramètres de cuisson du protocole de cuisson récupéré, par exemple sur la base de la ou des caractéristiques de cuisson par défaut ajustées.

La caractéristique de cuisson par défaut peut être l'une parmi un niveau de cuisson, un aspect extérieur et une couleur.

Le nombre de protocoles de cuisson enregistrés dans la base de données peut être inférieur au nombre de combinaisons de type de produit et de style de cuisson. Le nombre de protocoles de cuisson enregistrés dans la base de données peut être inférieur à un dixième du nombres combinaisons de type de produit et de style de cuisson.

L'invention concerne également un programme d'ordinateur comprenant un code de programme lisible par ordinateur pour entraîner l'exécution par un processeur d'une procédure pour mettre en oeuvre le procédé susmentionné. L'invention concerne également un système de contrôle d'appareil de cuisson configuré pour mettre en oeuvre le procédé susmentionné.

L'invention concerne également un système de contrôle d'appareil de cuisson comprenant un code de programme lisible par ordinateur pour entraîner l'exécution par un processeur d'une procédure pour mettre en oeuvre le procédé susmentionné.

L'appareil de cuisson peut comprendre une interface utilisateur utilisable pour recevoir des entrées d'un utilisateur et pour afficher des informations. L'appareil de cuisson peut comprendre une mémoire, par exemple dans laquelle est enregistrée une pluralité de protocoles de cuisson ou une base de données de protocoles de cuisson. L'appareil de cuisson peut comprendre un contrôleur connecté de manière opérationnelle à l'interface utilisateur et à la mémoire.

Le contrôleur peut être configuré pour recevoir, par exemple via l'interface utilisateur, une sélection de type de produit parmi une pluralité de types de produits sélectionnables. Le contrôleur peut être configuré pour afficher, par exemple via l'interface utilisateur et/ou en réponse à la sélection de type de produit, une pluralité de catégories de cuisson associés à la sélection de type de produit. Le contrôleur peut être configuré pour recevoir, par exemple via l'interface utilisateur, une sélection de catégorie de cuisson parmi la pluralité de catégories de cuisson affichées.

Le contrôleur peut être configuré pour afficher, par exemple via l'interface utilisateur et/ou en réponse à la sélection de catégorie de cuisson, une pluralité de styles de cuisson associés à la sélection de catégorie de cuisson. Le contrôleur peut être configuré pour recevoir, par exemple via l'interface utilisateur, une sélection de style de cuisson parmi la pluralité de styles de cuisson affichés.

Le contrôleur peut être configuré pour récupérer, par exemple à partir de la pluralité de protocoles de cuisson ou de la base de données de protocoles de cuisson enregistrée dans la mémoire, un protocole de cuisson associé à la combinaison sélectionnée de type de produit et/ou de catégorie de cuisson et/ou de style de cuisson.

L'invention concerne également un système de contrôle d'appareil de cuisson comprenant : une interface utilisateur utilisable pour recevoir des entrées d'un utilisateur et pour afficher des informations ; une mémoire dans laquelle est enregistrée une base de données de protocoles de cuisson ; et un contrôleur connecté de manière opérationnelle à l'interface utilisateur et à la mémoire ; dans lequel le contrôleur est configuré pour : recevoir, via l'interface utilisateur, une sélection de type de produit parmi une pluralité de types de produits sélectionnables ; afficher, via l'interface utilisateur et en réponse à la sélection de type de produit, une pluralité de catégories de cuisson associés à la sélection de type de produit ; recevoir, via l'interface utilisateur, une sélection de catégorie de cuisson parmi la pluralité de catégories de cuisson affichées ; afficher, via l'interface utilisateur et en réponse à la sélection de catégorie de cuisson, une pluralité de styles de cuisson associés à la sélection de catégorie de cuisson ; recevoir, via l'interface utilisateur, une sélection de style de cuisson parmi la pluralité de styles de cuisson affichés ; récupérer, à partir de la base de données de protocoles de cuisson enregistrée dans la mémoire, un protocole de cuisson associé à la combinaison sélectionnée de type de produit, de catégorie de cuisson et de style de cuisson.

Le contrôleur peut être configuré pour recevoir, par exemple via l'interface utilisateur, une sélection de catégorie de produits parmi une pluralité de catégories de produits sélectionnables. Le contrôleur peut être configuré pour afficher, par exemple via l'interface utilisateur et/ou en réponse à la sélection de catégorie de produits, une pluralité de types de produits associés à la sélection de catégorie de produits. Les types de produits sélectionnables peuvent correspondre aux types de produits affichés.

Les catégories de produits sélectionnables peuvent correspondre des produits carnés et non carnés. Les types de produits sélectionnables associés à la catégorie des produits carnés peuvent correspondre au moins un, par exemple au moins deux, des produits suivants : boeuf, agneau, canard, veau, poulet, dinde, porc, poisson, crustacés, cocotte de viande et cocotte de poisson. Les types de produits sélectionnables associés à la catégorie des produits non carnés peuvent correspondre au moins un, par exemple au moins deux, des produits suivants : légumes verts, légumes racines, pâtes, riz, pain, croissants et tartes.

L'affichage des catégories de cuisson peut être omis pour au moins un type de produit de la pluralité de types de produits sélectionnables. La réception de la sélection de catégorie de cuisson peut être omis pour au moins un type de produit de la pluralité de types de produits sélectionnables. L'affichage et la réception des catégories de cuisson peuvent être omis pour au moins un type de produit de la pluralité de types de produits sélectionnables.

L'affichage des catégories de cuisson peut être omis pour les produits non carnés. La réception de la sélection de catégorie de cuisson peut être omis pour les produits non carnés. L'affichage et la réception des catégories de cuisson peuvent être omis pour les produits non carnés.

La catégorie de cuisson peut comprendre une vitesse de cuisson et/ou une coupe de viande. Les styles de cuisson sélectionnables peuvent comprendre un ou plus, par exemple deux ou plus, des styles suivants : grillé, rôti, braisé, cuit au four, à la vapeur, sous vide, poché et à l'étouffée.

Le contrôleur peut être configuré pour afficher, par exemple via l'interface utilisateur, un sélecteur de réglage, qui peut être pour ajuster une caractéristique de produit par défaut du type de produit sélectionné. Le contrôleur peut être configuré pour recevoir, par exemple via le sélecteur de réglage affiché sur l'interface utilisateur, un ajustement de la caractéristique de produit par défaut. Le contrôleur peut être configuré pour ajuster un ou plusieurs paramètres de cuisson du protocole de cuisson récupéré, par exemple sur la base de la caractéristique de produit par défaut ajustée.

La caractéristique de produit par défaut peut être l'une parmi une taille et une épaisseur.

Le ou les paramètres de cuisson du protocole de cuisson peuvent comprendre un ou plus des paramètres suivants : température ambiante, température à coeur, humidité et durée d'une ou plusieurs étapes du protocole.

Le contrôleur peut être configuré pour afficher, par exemple via l'interface utilisateur, un ou plusieurs sélecteurs de réglage permettant chacun d'ajuster une caractéristique de cuisson par défaut du style de cuisson sélectionné. Le contrôleur peut être configuré pour recevoir, par exemple via le ou les sélecteurs de réglage affichés sur l'interface utilisateur, un ajustement de la ou des caractéristiques de cuisson par défaut. Le contrôleur peut être configuré pour ajuster un ou plusieurs paramètres de cuisson du protocole de cuisson récupéré, par exemple sur la base de la ou des caractéristiques de cuisson par défaut ajustées.

La caractéristique de cuisson par défaut peut être l'une parmi un niveau de cuisson, un aspect extérieur et une couleur.

Le nombre de protocoles de cuisson enregistrés dans la base de données peut être inférieur au nombre de combinaisons de type de produit et de style de cuisson. Le nombre de protocoles de cuisson enregistrés dans la base de données peut être inférieur à un dixième du nombres combinaisons de type de produit et de style de cuisson.

La mise à disposition de caractéristiques de produit par défaut et de sélecteurs de régulation permettant de les ajuster facilite l'utilisation de protocoles communs pour une multitude de combinaisons différentes de types de produits et de styles de cuisson. En outre, le contrôleur pourrait être configuré pour sélectionner l'un des protocoles communs, mais avec des caractéristiques de produit par défaut différentes, en fonction, par exemple, du type de produit sélectionné. D'autres configurations sont également envisageables pour réduire encore le nombre de protocoles enregistrés dans la base de données.

L'interface utilisateur peut comprendre un écran tactile, qui peut être configuré pour afficher une pluralité de menus déroulants et/ou d'icônes. Les menus déroulants et/ou les icônes peuvent chacune représenter une sélection respective.

L'invention concerne également un appareil de cuisson. L'appareil de cuisson peut comprendre le programme d'ordinateur susmentionnée et/ou le système de contrôle d'appareil de cuisson susmentionnée.

L'appareil de cuisson peut comprendre un four.

Pour éviter tout doute, toutes les caractéristiques décrites ici s'appliquent également à tout aspect de l'invention.

Dans le cadre de la présente demande, il est expressément prévu que les divers aspects, modes de réalisation, exemples et alternatives exposés dans les paragraphes précédents, dans les revendications et/ou dans la description et les dessins suivants, et en particulier les caractéristiques individuelles de ceux-ci, peuvent être pris indépendamment ou dans n'importe quelle combinaison. En d'autres termes, tous les modes de réalisation et/ou les caractéristiques de tout mode de réalisation peuvent être combinés de n'importe quelle manière, à moins que ces caractéristiques ne soient incompatibles.

Pour éviter toute ambiguïté, les termes "peut", "et/ou", "par exemple", "par exemple" et tout autre terme similaire utilisés dans le présent document doivent être interprétés comme non limitatifs, de sorte que toute caractéristique ainsi décrite ne doit pas nécessairement être présente. En effet, toute combinaison de caractéristiques optionnelles est expressément envisagée sans s'écarter de la portée de l'invention, que celles-ci soient ou non expressément revendiquées. Le demandeur se réserve le droit de modifier toute revendication déposée à l'origine ou de déposer toute nouvelle revendication en conséquence, y compris le droit de modifier toute revendication déposée à l'origine pour qu'elle dépende de et/ou incorpore toute caractéristique de toute autre revendication bien qu'elle ne soit pas revendiquée à l'origine de cette manière.

### Brève description des figures

D'autres caractéristiques et avantages de l'invention apparaîtront au cours de la lecture de la description détaillée qui va suivre pour la compréhension de laquelle on se reportera aux dessins annexés dans lesquels :
[Fig. 1] la figure 1 illustre un appareil de cuisson selon l'invention ;
[Fig. 2] la figure 2 illustre un écran d'accueil affiché sur l'interface utilisateur de l'appareil de cuisson de la figure 1 ;
[Fig. 3] la figure 3 est une représentation schématique d'une partie des sélections possibles avec les menus déroulants de la figure 2 ; et
[Fig. 4] la figure 4 est un organigramme d'un processus de commande de l'appareil de cuisson de la figure 1.

### Description détaillée de l'invention

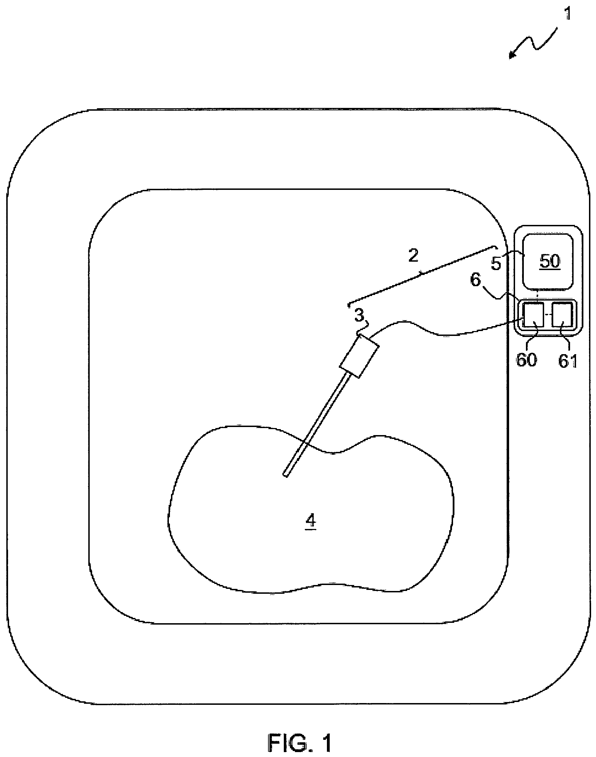

En se référant à la figure 1, on peut voir un appareil de cuisson 1 comprenant un système de contrôle 2. Le système de contrôle 2 comprend une sonde à coeur 3 pour mesurer une température à coeur d'un article à cuire 4, une interface utilisateur 5 et un contrôleur 6 connectée de manière opérationnelle à la sonde à coeur 3 et à l'interface utilisateur 5. Le contrôleur 6 comprend une mémoire 60 et un processeur 61 connecté de manière opérationnelle à la mémoire 60.

L'interface utilisateur 5 comprend un écran tactile 50 configuré pour afficher des informations et des moyens d'entrée graphiques pour permettre à un utilisateur d'entrer des informations et des commandes.

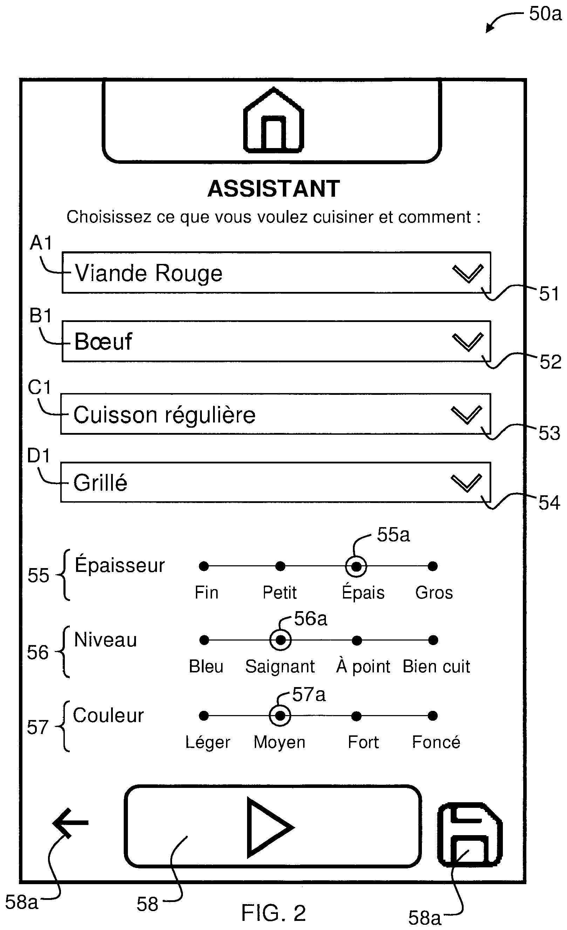

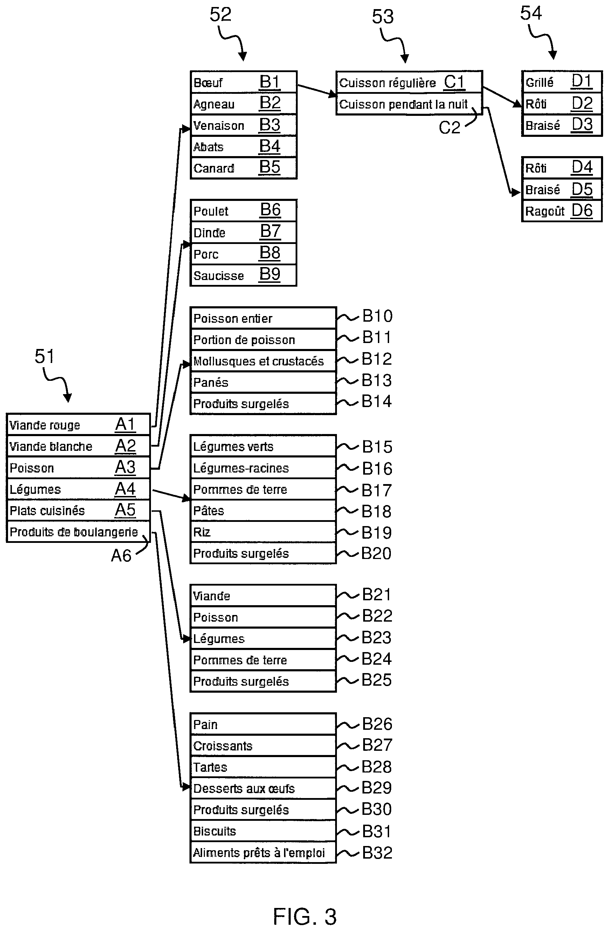

La figure 2 montre un écran d'accueil 50a affiché sur l'écran tactile 50. L'écran d'accueil 50a comprend plusieurs menus déroulants 51, 52, 53, 54, des sélecteurs de réglage 55, 56, 57 et des icônes 58, 59a, 59b. Une hiérarchie de sélections pour les menus déroulants 51, 52, 53, 54 est illustrée à la figure 3.

Dans cet exemple, le premier menu déroulant 51 énumère des catégories de produits, notamment la viande rouge A1, la viande blanche A2, le poisson A3, les légumes A4, les plats cuisinés A5 et les produits de boulangerie A6. Chacune de ces catégories A1-A5 est associée à une série de types de produits B1-B5, B6-B9, B10-B14, 815-820, B21-B25 et B26-B32, qui peuvent être sélectionnés dans le deuxième menu déroulant 52. Les types de produits de la première catégorie, viande rouge A1, comprennent par exemple le boeuf B1, l'agneau B2, le venaison B3, les abats B4 et le canard B5. Les autres catégories A2-A6 comprennent chacune une liste spécifique de types de produits B1-B5, B6-B9, B10-B14, B15-B20, B21-B25 et B26-B32.

Avant la sélection de la catégorie de produits A1-A6, le deuxième menu déroulant 52 ne contient aucune option. En réponse à la sélection d'une catégorie de produits A1-A6 dans le premier menu déroulant 51, la liste appropriée des types de produits B1-B5, B6-B9, B10-B14, B15-B20, B21-B25 et B26-B32 est affichée dans le deuxième menu déroulant 52, ce qui simplifie la sélection pour l'utilisateur.

De même, chaque type de produit B1-B32 est associé à une série de catégories de cuisson C1, C2, qui peuvent être sélectionnées à l'aide du troisième menu déroulant 53. Par souci de simplicité, seules les catégories de cuisson C1, C2 associées au premier type de produit, à savoir le boeuf B1, sont représentées à la figure 3. Chaque catégorie de cuisson C1, C2 comprend une série de styles de cuisson D1-D3 et D4-D6, qui peuvent être sélectionnés à l'aide du quatrième menu déroulant 54. Seuls les modes de cuisson D1-D3 et D4-D6 correspondant aux catégories de cuisson C1, C2 pour le boeuf B1 sont représentés.

Comme pour le deuxième menu déroulant 52, la liste appropriée des catégories de cuisson C1, C2 n'est affichée dans le troisième menu déroulant 53 qu'après la sélection d'un type de produit B1-B32. De même, la liste appropriée des modes de cuisson D1-D3 et D4-D6 n'est affichée dans le quatrième menu déroulant 54 qu'après la sélection d'une catégorie de cuisson C1, C2. Il convient toutefois de noter que pour certains des types de produits B1-B32, notamment les produits non-carnés B15-B20 et B26-B32, la sélection d'une catégorie de cuisson peut être omise.

Grâce à l'invention, l'utilisateur peut sélectionner un programme de cuisson approprié à l'aide de quatre sélections simples 51, 52, 53, 54. En réponse à la sélection, le contrôleur 6 récupère le protocole approprié pour le programme de cuisson à partir d'une base de données de protocoles enregistrée dans la mémoire 60. Avantageusement, le nombre de protocoles de cuisson enregistrés dans la base de données est sensiblement inférieur au nombre de combinaisons de types de produits et de styles de cuisson. En d'autres termes, les inventeurs ont déterminé que le même protocole de cuisson peut être utilisé pour plusieurs combinaisons différentes, ce qui réduit considérablement les besoins de mémoire 60 de la base de données et augmente la réactivité du contrôleur 6. En fait, il a été déterminé que le nombre de protocoles peut être inférieur à un dixième du nombre de combinaisons de types de produits et de styles de cuisson.

Chaque protocole de cuisson comprend une ou plusieurs caractéristiques de produit par défaut et/ou une ou plusieurs caractéristiques de cuisson par défaut. L'invention permet d'ajuster ces caractéristiques par défaut à l'aide des sélecteurs de réglage 55, 56, 57. Par exemple, trois sélecteurs de réglage 55, 56, 57 apparaissent lorsque le protocole de cuisson de la sélection spécifique illustrée à la figure 2 est sélectionné.

Un premier sélecteur de réglage 55 permet de régler l'épaisseur du produit et, par défaut, le sélection 55a est « épais ». L'utilisateur peut modifier cette sélection 55a en touchant simplement l'une des autres options, en l'occurrence « mince », « petit » ou « gros ». Un deuxième sélecteur de réglage 56 permet de régler le niveau de cuisson et, par défaut, le sélection 56a est « saignant ». L'utilisateur peut modifier cette sélection 55a en touchant simplement l'une des autres options, en l'occurrence « bleu », « à point » ou « bien cuit ». Un troisième sélecteur de réglage 57 permet de régler le couleur et, par défaut, le sélection 57a est « moyen ». L'utilisateur peut modifier cette sélection 55a en touchant simplement l'une des autres options, en l'occurrence « léger », « fort » ou « foncé ».

En réponse aux ajustements apportés par l'utilisateur aux sélections 55a, 56a, 57a, le contrôleur 6 ajuste un ou plusieurs paramètres de cuisson du protocole de cuisson sélectionné. Dans cet exemple, les paramètres de cuisson du protocole de cuisson qui sont ajustés par les réglages de l'utilisateur sur les sélections 55a, 56a, 57a comprennent un ou plusieurs des paramètres suivants : la température ambiante, la température à coeur, l'humidité et la durée d'une ou plusieurs étapes du protocole. Il est également envisagé d'ajuster d'autres paramètres de cuisson.

L'utilisateur peut alors sélectionner l'icône de lancement de la cuisson 58 pour lancer le cycle de cuisson sur la base du protocole ajusté. Il est également envisagé de sauvegarder le protocole ajusté en utilisant l'une des icônes 58a sous la forme d'une disquette. Dans ce cas, un nouveau protocole serait sauvegardé dans la mémoire 60, qui pourrait être récupérée à une date ultérieure. Bien qu'il soit possible que le contrôleur 6 soit configuré pour remplacer le protocole approprié dans la base de données, il est préférable qu'un nouveau protocole soit créé et puisse être associé à un profil d'utilisateur.

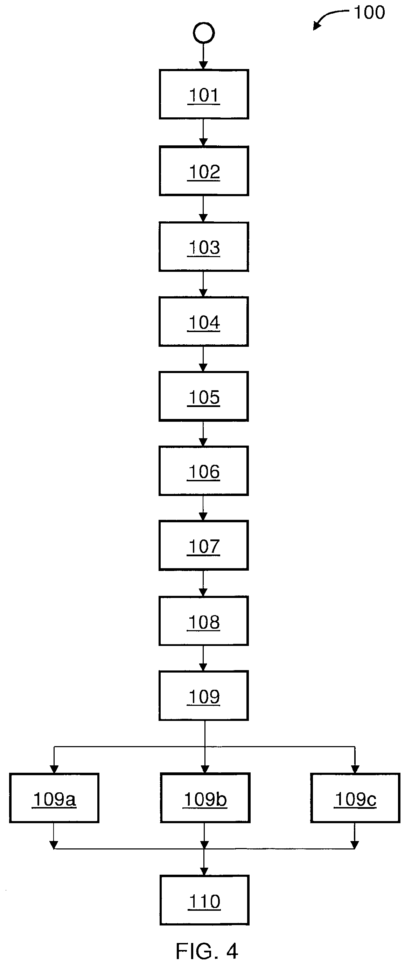

Comme le résume la figure 4, l'invention propose un procédé de commande 100 d'appareil de cuisson 1 comprenant les étapes suivantes :
affichage 101, via l'interface utilisateur 5, d'un premier menu déroulant 51 comprenant une pluralité de catégories de produits sélectionnables A1-A6 ;
réception 102, via le premier menu déroulant 51 sur l'interface utilisateur 5, d'une sélection de catégorie de produits A1 parmi une pluralité de catégories de produits sélectionnables A1-A6 ;
affichage 103, via l'interface utilisateur 5 et en réponse à la sélection de catégorie de produits A1, d'un deuxième menu déroulant 52 comprenant une pluralité de types de produits B1-B5 associés à la sélection de catégorie de produits A1 ;
réception 104, via le deuxième menu déroulant 52 sur l'interface utilisateur 5, d'une sélection de type de produit B1 parmi la pluralité de types de produits affichées B1-B5;
affichage 105, via l'interface utilisateur 5 et en réponse à la sélection de type de produit B1, d'un troisième menu déroulant 53 comprenant une pluralité de catégories de cuisson C1, C2 associées à la sélection de type de produit B1 ;
réception 106, via le troisième menu déroulant 53 sur l'interface utilisateur 5, d'une sélection de catégorie de cuisson C1 parmi la pluralité de catégories de cuisson affichées C1, C2;
affichage 107, via l'interface utilisateur 5 et en réponse à la sélection de catégorie de cuisson C1, d'un quatrième menu déroulant 52 comprenant une pluralité de styles de cuisson D1-D3 associés à la sélection de catégorie de cuisson C1 ;
réception 108, via le quatrième menu déroulant 52 sur l'interface utilisateur 5, d'une sélection de style de cuisson D1 parmi la pluralité de styles de cuisson affichés D1-D3 ;
récupération 108, à partir la base de données de protocoles de cuisson enregistrée dans la mémoire 60, d'un protocole de cuisson associé à la combinaison sélectionnée de catégorie de produits A1, de type de produit B1, de catégorie de cuisson C1 et de style de cuisson D1 ;
affichage 109, via l'interface utilisateur 5, des sélecteurs de réglage 55, 56, 57 permettant chacun d'ajuster une caractéristique respective de produit par défaut du type de produit sélectionné B1 ;
réception 109a, 109b, 109c, via le sélecteur de réglage affiché sur l'interface utilisateur, d'un ajustement de la caractéristique de produit par défaut ; et
ajustement 110 d'un ou de plusieurs paramètres de cuisson du protocole de cuisson récupéré sur la base de la caractéristique de produit par défaut ajustée 55a, 56a, 57a.

Dans toute la description et les revendications, les mots "comprennent" et "contiennent" et leurs variations signifient "y compris mais non limité à", et ils ne sont pas destinés à (et n'excluent pas) d'autres parties, additifs, composants, entiers ou étapes. Dans toute la description et les revendications de cette spécification, le singulier englobe le pluriel, à moins que le contexte ne l'exige autrement. En particulier, lorsque l'article indéfini est utilisé, la spécification doit être comprise comme envisageant la pluralité ainsi que la singularité, à moins que le contexte n'exige autre chose.

Les caractéristiques, nombres entiers, caractéristiques, composés ou groupes décrits en liaison avec un aspect, une réalisation ou un exemple particulier de l'invention doivent être compris comme étant applicables à tout autre aspect, réalisation ou exemple décrit dans le présent document, sauf incompatibilité avec celui-ci. L'attention du lecteur est dirigée vers tous les papiers et documents qui sont déposés simultanément ou antérieurement à cette spécification en relation avec cette demande et qui sont ouverts à l'inspection publique avec cette spécification, et le contenu de tous ces papiers et documents est incorporé ici par référence.

## Revendications

1. Un procédé de commande d'appareil de cuisson comprenant une interface utilisateur et un contrôleur connecté de manière opérationnelle à l'interface utilisateur, **caractérisé en ce que** le procédé comprend les étapes suivantes :
réception, via l'interface utilisateur, d'une sélection de type de produit parmi une pluralité de types de produits sélectionnables ;
affichage, via l'interface utilisateur et en réponse à la sélection de type de produit, d'une pluralité de catégories de cuisson associés à la sélection de type de produit ;
réception, via l'interface utilisateur, d'une sélection de catégorie de cuisson parmi la pluralité de catégories de cuisson affichées ;
affichage, via l'interface utilisateur et en réponse à la sélection de catégorie de cuisson, d'une pluralité de styles de cuisson associés à la sélection de catégorie de cuisson ;
réception, via l'interface utilisateur, d'une sélection de style de cuisson parmi la pluralité de styles de cuisson affichés ;
récupération, à partir d'une base de données de protocoles de cuisson, d'un protocole de cuisson associé à la combinaison sélectionnée de type de produit, de catégorie de cuisson et de style de cuisson.

2. Procédé de commande d'appareil de cuisson selon la revendication 1, dans lequel le procédé comprend les étapes suivantes :
réception, via l'interface utilisateur, d'une sélection de catégorie de produits parmi une pluralité de catégories de produits sélectionnables ; et
affichage, via l'interface utilisateur et en réponse à la sélection de catégorie de produits, d'une pluralité de types de produits associés à la sélection de catégorie de produits ;
les types de produits sélectionnables correspondent aux types de produits affichés.

3. Procédé de commande d'appareil de cuisson selon la revendication 2, dans lequel les catégories de produits sélectionnables comprennent des produits carnés et non carnés.

4. Procédé de commande d'appareil de cuisson selon la revendication 3, dans lequel :
les types de produits sélectionnables associés à la catégorie des produits carnés comprennent au moins deux des produits suivants : boeuf, agneau, canard, veau, poulet, dinde, porc, poisson, crustacés, cocotte de viande et cocotte de poisson; et
les types de produits sélectionnables associés à la catégorie des produits non carnés comprennent au moins deux des produits suivants : légumes verts, légumes racines, pâtes, riz, pain, croissants et tartes.

5. Procédé de commande d'appareil de cuisson selon la revendication 3 ou la revendication 4, dans lequel les étapes d'affichage et de réception des catégories de cuisson sont omises pour les produits non carnés.

6. Procédé de commande d'appareil de cuisson selon l'une quelconque des revendications précédentes, dans lequel la catégorie de cuisson comprend une vitesse de cuisson et/ou une coupe de viande.

7. Procédé de commande d'appareil de cuisson selon l'une quelconque des revendications précédentes, dans lequel les styles de cuisson sélectionnables comprennent deux ou plus des styles suivants : grillé, rôti, braisé, cuit au four, à la vapeur, sous vide, poché et à l'étouffée.

8. Procédé de commande d'appareil de cuisson selon l'une quelconque des revendications précédentes, comprenant les étapes suivantes :
affichage, via l'interface utilisateur, d'un sélecteur de réglage pour ajuster une caractéristique de produit par défaut du type de produit sélectionné ;
réception, via le sélecteur de réglage affiché sur l'interface utilisateur, d'un ajustement de la caractéristique de produit par défaut ; et
ajustement d'un ou de plusieurs paramètres de cuisson du protocole de cuisson récupéré sur la base de la caractéristique de produit par défaut ajustée.

9. Procédé de commande d'appareil de cuisson selon la revendication 8, dans lequel la caractéristique de produit par défaut est l'une parmi une taille et une épaisseur.

10. Procédé de commande d'appareil de cuisson selon l'une quelconque des revendications précédentes, comprenant les étapes suivantes :
affichage, via l'interface utilisateur, d'un ou de plusieurs sélecteurs de réglage permettant chacun d'ajuster une caractéristique de cuisson par défaut du style de cuisson sélectionné ;
réception, via le ou les sélecteurs de réglage affichés sur l'interface utilisateur, d'un ajustement de la ou des caractéristiques de cuisson par défaut ; et
ajustement d'un ou de plusieurs paramètres de cuisson du protocole de cuisson récupéré sur la base de la ou des caractéristiques de cuisson par défaut ajustées.

11. Procédé de commande d'appareil de cuisson selon la revendication 10, dans lequel la caractéristique de cuisson par défaut est l'une parmi un niveau de cuisson, un aspect extérieur et une couleur.

12. Procédé de commande d'appareil de cuisson selon l'une quelconque des revendications 8 à 11, dans lequel le ou les paramètres de cuisson du protocole de cuisson comprennent un ou plus des paramètres suivants : température ambiante, température à coeur, humidité et durée d'une ou plusieurs étapes du protocole.

13. Procédé de commande d'appareil de cuisson selon l'une quelconque des revendications précédentes, dans lequel le nombre de protocoles de cuisson enregistrés dans la base de données est inférieur au nombre de combinaisons de type de produit et de style de cuisson.

14. Procédé de commande d'appareil de cuisson selon la revendication 13, dans lequel le nombre de protocoles de cuisson enregistrés dans la base de données est inférieur à un dixième du nombres combinaisons de type de produit et de style de cuisson.

15. Un système de contrôle d'appareil de cuisson comprenant :
une interface utilisateur utilisable pour recevoir des entrées d'un utilisateur et pour afficher des informations ;
une mémoire dans laquelle est enregistrée une base de données de protocoles de cuisson ; et
un contrôleur connecté de manière opérationnelle à l'interface utilisateur et à la mémoire ;
dans lequel le contrôleur est configuré pour :
recevoir, via l'interface utilisateur, une sélection de type de produit parmi une pluralité de types de produits sélectionnables ;
afficher, via l'interface utilisateur et en réponse à la sélection de type de produit, une pluralité de catégories de cuisson associées à la sélection de type de produit ;
recevoir, via l'interface utilisateur, une sélection de catégorie de cuisson parmi la pluralité de catégories de cuisson affichées ;
afficher, via l'interface utilisateur et en réponse à la sélection de catégorie de cuisson, une pluralité de styles de cuisson associés à la sélection de catégorie de cuisson ;
recevoir, via l'interface utilisateur, une sélection de style de cuisson parmi la pluralité de styles de cuisson affichés ;
récupérer, à partir de la base de données de protocoles de cuisson enregistrée dans la mémoire, un protocole de cuisson associé à la combinaison sélectionnée de type de produit, de catégorie de cuisson et de style de cuisson.

16. Système de contrôle d'appareil de cuisson selon la revendication 15, dans lequel le contrôleur est configuré pour :
recevoir, via l'interface utilisateur, une sélection de catégorie de produits parmi une pluralité de catégories de produits sélectionnables ; et
afficher, via l'interface utilisateur et en réponse à la sélection de catégorie de produits, une pluralité de types de produits associés à la sélection de catégorie de produits ;
les types de produits sélectionnables correspondent aux types de produits affichés.

17. Système de contrôle d'appareil de cuisson selon la revendication 16, dans lequel les catégories de produits sélectionnables comprennent des produits carnés et non carnés.

18. Système de contrôle d'appareil de cuisson selon la revendication 17, dans lequel :
les types de produits sélectionnables associés à la catégorie des produits carnés comprennent au moins deux des produits suivants : boeuf, agneau, canard, veau, poulet, dinde, porc, poisson, crustacés, cocotte de viande et cocotte de poisson; et
les types de produits sélectionnables associés à la catégorie des produits non carnés comprennent au moins deux des produits suivants : légumes verts, légumes racines, pâtes, riz, pain, croissants et tartes.

19. Système de contrôle d'appareil de cuisson selon la revendication 16 ou la revendication 17, dans lequel l'affichage et la réception des catégories de cuisson sont omis pour les produits non carnés.

20. Système de contrôle d'appareil de cuisson selon l'une quelconque des revendications 15 à 19, dans lequel la catégorie de cuisson comprend une vitesse de cuisson et/ou une coupe de viande.

21. Système de contrôle d'appareil de cuisson selon l'une quelconque des revendications 15 à 20, dans lequel les styles de cuisson sélectionnables comprennent deux ou plus des styles suivants : grillé, rôti, braisé, cuit au four, à la vapeur, sous vide, poché et à l'étouffée.

22. Système de contrôle d'appareil de cuisson selon l'une quelconque des revendications 15 à 21, dans lequel le contrôleur est configuré pour :
afficher, via l'interface utilisateur, un sélecteur de réglage pour ajuster une caractéristique de produit par défaut du type de produit sélectionné ;
recevoir, via le sélecteur de réglage affiché sur l'interface utilisateur, un ajustement de la caractéristique de produit par défaut ; et
ajuster un ou plusieurs paramètres de cuisson du protocole de cuisson récupéré sur la base de la caractéristique de produit par défaut ajustée.

23. Système de contrôle d'appareil de cuisson selon la revendication 22, dans lequel la caractéristique de produit par défaut est l'une parmi une taille et une épaisseur.

24. Système de contrôle d'appareil de cuisson selon l'une quelconque des revendications 15 à 23, dans lequel le contrôleur est configuré pour :
afficher, via l'interface utilisateur, un ou plusieurs sélecteurs de réglage permettant chacun d'ajuster une caractéristique de cuisson par défaut du style de cuisson sélectionné ;
recevoir, via le ou les sélecteurs de réglage affichés sur l'interface utilisateur, un ajustement de la ou des caractéristiques de cuisson par défaut ; et
ajuster un ou plusieurs paramètres de cuisson du protocole de cuisson récupéré sur la base de la ou des caractéristiques de cuisson par défaut ajustées.

25. Système de contrôle d'appareil de cuisson selon la revendication 24, dans lequel la caractéristique de cuisson par défaut est l'une parmi un niveau de cuisson, un aspect extérieur et une couleur.

26. Système de contrôle d'appareil de cuisson selon l'une quelconque des revendications 22 à 25, dans lequel le ou les paramètres de cuisson du protocole de cuisson comprennent un ou plus des paramètres suivants : température ambiante, température à coeur, humidité et durée d'une ou plusieurs étapes du protocole.

27. Système de contrôle d'appareil de cuisson selon l'une quelconque des revendications 15 à 26, dans lequel le nombre de protocoles de cuisson enregistrés dans la base de données est inférieur au nombre de combinaisons de type de produit et de style de cuisson.

28. Système de contrôle d'appareil de cuisson selon la revendication 27, dans lequel le nombre de protocoles de cuisson enregistrés dans la base de données est inférieur à un dixième du nombres combinaisons de type de produit et de style de cuisson.

29. Système de contrôle d'appareil de cuisson selon l'une quelconque des revendications 15 à 28, dans lequel l'interface utilisateur comprend un écran tactile configuré pour afficher une pluralité de menus déroulants et/ou d'icônes représentant chacune une sélection respective.

30. Un appareil de cuisson comprenant un système de contrôle d'appareil de cuisson selon l'une quelconque des revendications 15 à 29.
